# EUROPEAN PATENT APPLICATION

(11) **EP 4 135 230 A1**
(43) Date of publication of application: **15.02.2023**
(21) Application number: 22189095.7
(22) Date of filing: 05.08.2022
(51) Int. Cl.: H04L 1/00

(54) **WIRELESS DEVICE WITH SELECTION OF TRANSMISSION RATE ACCORDING TO PERIODIC INTERFERENCE**

(30) Priority: 12.08.2021 US 202117444914
(71) Applicant: NXP B.V., 5656 AG Eindhoven (NL)
(72) Inventor: Mertens, Christophe Olivier, 5656AG Eindhoven (NL); Joseph, Antony, 5656AG Eindhoven (NL)
(74) Representative: Miles, John Richard

(57) **Abstract**

One example discloses a wireless device, comprising: an input configured to receive an interference signal; a transmitter configured to generate a transmit signal having either a first data rate or a second data rate; and a controller coupled to the input and the transmitter, and configured to define an interference threshold; wherein the controller is configured to command the transmitter to modulate the transmit signal at the first data rate if the interference signal is below the interference threshold, and modulate the transmit signal at the second data rate if the interference signal is above the interference threshold.

## Description

The present specification relates to systems, methods, apparatuses, devices, articles of manufacture and instructions for wireless communications.

### SUMMARY

According to an example embodiment, a wireless device, comprising: an input configured to receive an interference signal; a transmitter configured to generate a transmit signal having either a first data rate or a second data rate; and a controller coupled to the input and the transmitter, and configured to define an interference threshold; wherein the controller is configured to command the transmitter to modulate the transmit signal at the first data rate if the interference signal is below the interference threshold, and modulate the transmit signal at the second data rate if the interference signal is above the interference threshold.

In another example embodiment, the first data rate is greater than the second data rate.

In another example embodiment, the first data rate has a higher physical layer modulation order than the second data rate.

In another example embodiment, the first data rate has a lower energy/bit ratio than the second data rate.

In another example embodiment, the transmit signal is a near-field communications signal.

In another example embodiment, the controller is configured define a first period when the interference signal is below the interference threshold, and a second period when the interference signal is above the interference threshold.

In another example embodiment, the first data rate is greater than the second data rate; and the controller is configured to command the transmitter to generate the transmit signal only using the first data rate in the first period.

In another example embodiment, the first data rate is greater than the second data rate; and the controller is configured to command the transmitter to generate the transmit signal only using the second data rate in the second period.

In another example embodiment, the controller is configured to command the transmitter to generate the transmit signal only in the first period.

In another example embodiment, the first data rate is encoded using PSK (phase shift keying) and the second data rate is encoded using FSK (frequency shift keying).

In another example embodiment, the interference signal affects either a packet-error-rate (PER) or bit-error-rate (BER) of the transmit signal when received.

In another example embodiment, the wireless device is powered by a battery and/or an energy harvesting device.

In another example embodiment, the controller is configured to recharacterize the interference signal each time a message is to be sent within the transmit signal.

In another example embodiment, the controller is configured to characterize the interference signal as either periodic or non-periodic over a predetermined time window.

In another example embodiment, the first data rate is greater than the second data rate; if the interference signal is periodic, then the controller is configured to command the transmitter to modulate the transmit signal at the first data rate during an absence of the interference signal; and if the interference signal is non-periodic, then the controller is configured to command the transmitter to only modulate the transmit signal at the second data rate.

In another example embodiment, the controller is configured to recharacterize the interference signal if a bit-error-rate (BER) or packet-error-rate (PER) for the transmit signal as received is greater than a maximum acceptable BER or PER.

In another example embodiment, the wireless device is a first wireless device and the first wireless device is configured to communicate with a second wireless device; the first and second wireless devices are configured to define a communications schedule during which each of the wireless devices is permitted to transmit; and the wireless device next scheduled to transmit characterizes the interference signal right before transmitting a message.

In another example embodiment, the transmit signal is a far-field communications signal.

In another example embodiment, the first data rate and/or the second data rate are encoded using an error-correcting code.

According to an example embodiment, a method of distributing instructions, stored on a non-transitory, tangible computer readable storage medium, for configuring a wireless device: wherein the wireless device includes, an input; a transmitter; and a controller; wherein the instructions include, receiving an interference signal at the input; generating a transmit signal with the transmitter; defining an interference threshold with the controller; and using the controller to command the transmitter to modulate the transmit signal at a first data rate if the interference signal is below the interference threshold, and modulate the transmit signal at a second data rate if the interference is above the interference threshold.

The above discussion is not intended to represent every example embodiment or every implementation within the scope of the current or future Claim sets. The Figures and Detailed Description that follow also exemplify various example embodiments.

Various example embodiments may be more completely understood in consideration of the following Detailed Description in connection with the accompanying Drawings.

### BRIEF DESCRIPTION OF THE DRAWINGS

Figures 1A and 1B represent example graphs of interfering signals caused by interferers such as a computer keyboard and a kitchen mixer. These are two of numerous examples within home and office environments.
Figure 2 represents an example graph of a required energy-per-bit (E_{b}), normalized by noise-density (No), so as to achieve a given bit-error-rate (BER), for different modulation schemes 2-FSK, DQPSK, D8PSK
Figure 3 represents an example wireless device.
Figure 4A is an example graph of a near-field receiver input signal (dBµV) vs. packet error rate (PER) for a Convolutionally Coded (CC)-2FSK received near-field signal in the presence of a keyboard interferer.
Figure 4B is an example graph of a near-field receiver input signal (dBµV) vs. packet error rate (PER) for a Trellis Coded (TC)-D8PSK received near-field signal and a Convolutionally Coded (CC)-DQPSK in the presence of the keyboard interferer.
Figure 5 is an example table of an improvement in the wireless device's receiver sensitivity when switching modulation between CC-DQPSK and CC-2FSK in the presence of various interference signals.
Figure 6 is an example showing the required transmit power to achieve a 10% PER for various PHY modulation modes in the presence and absence of various interfering signals.
Figure 7 is an example set of instructions for enabling the wireless device to select a modulation order based on the interfering conditions.
Figure 8 is an example set of instructions for enabling the wireless device to detect the presence of any interferers.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

### DETAILED DESCRIPTION

Portable wireless communication devices are typically battery powered and in consequence low current consumption is of major importance for usage, autonomy and user experience. Low current consumption can be achieved by configuring the transmitting device's transmit power level as low as possible , thus operating close to the sensitivity level of the receiving communication device.

This however makes the receiving device vulnerable to especially intermittent interference or disturbance from interferers (i.e. interference sources). This receiver immunity can be improved by increasing the transmit power, which however is not desirable from current consumption point of view, and may not be possible by reliability constraints imposed by the chosen semiconductor technology.

Another way to increase the receiver's interference immunity/rejection consists of lowering a modulation order (i.e. the size of the symbol alphabet) or by increasing the symbol period (i.e. a lower symbol rate).

An additional way to increase the receiver's interference immunity/rejection consists of choosing a different modulation scheme in interference conditions, which may not be optimal from a power consumption point-of-view in AWGN-conditions, but with an intrinsic stronger resilience against interfering signals.

Near-field wireless communication devices are particularly sensitive to interferers since they operate in a set of ITU SRD frequency bands below 30 MHz. These near-field devices can be based on either near-field electromagnetic induction (NFEMI), where the transmitter and receiver are coupled by both magnetic (H) and electric (E) fields, near-field electric-induction (NFEI), where the transmitter and receiver are coupled by electric (E) fields, and near-field magnetic-induction (NFMI/NFC), where the transmitter and receiver are coupled by magnetic (H) fields. While RF wireless communication is accomplished by propagating an RF plane wave through free space, NFEMI, NFEI, NFMI and NFC communicates using non-propagating quasi-static E and/or H field signals.

Given this low frequency of operation, these near-field communication systems are susceptible to interfering signals originating from a variety of common switching devices present in their environment (e.g. home appliances, computer keyboards, game controllers, kitchen appliances, vehicles, children's toys, etc.).

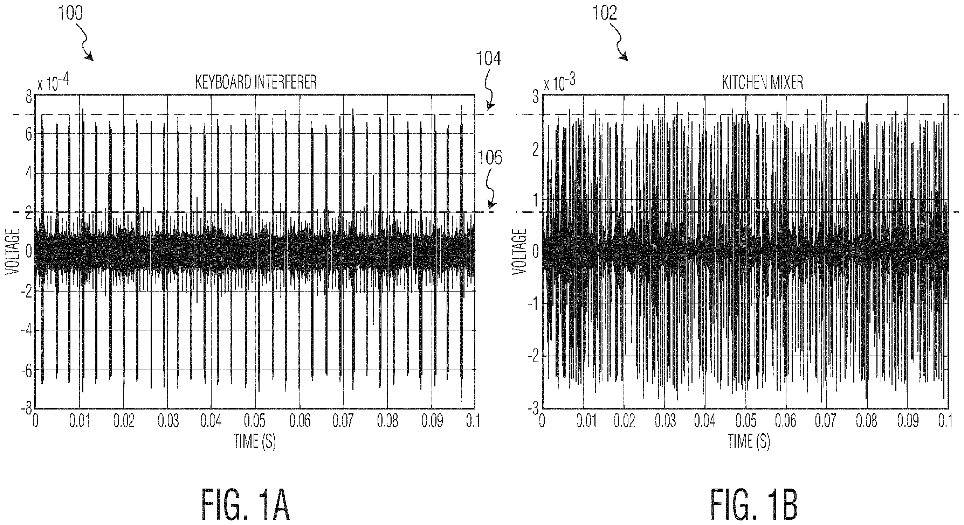

Figures 1A and 1B represent example graphs of strong near-field interfering signals caused by interferers such as a computer keyboard 100 and a kitchen mixer 102. For the purposes of later discussion of various example wireless device embodiments, a high noise threshold 104 and a low noise threshold 106 are defined. In these examples the high noise threshold 104 for the keyboard 100 has a peak value of about 58 dBµV, and for the kitchen mixer 102 of about 69 dBµV.

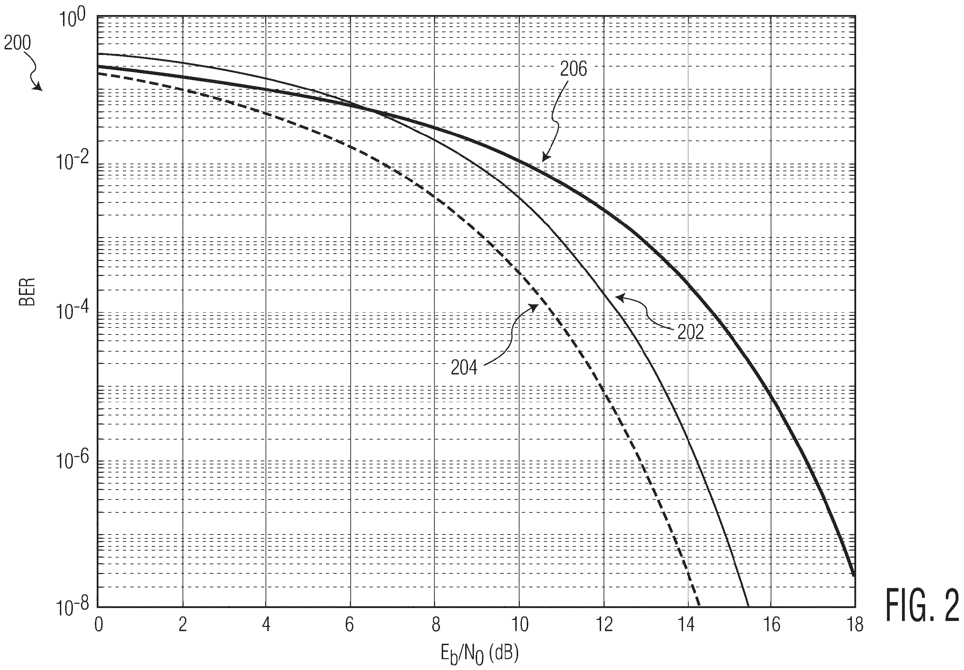

Figure 2 represents an example graph of a required energy-per-bit (E_{b}), normalized by noise-density (No), (i.e. E_{b}/N₀ figure of merit, similar to a signal to noise ratio (SNR)) so as to achieve a given bit-error-rate (BER). Three curves are shown, including a lower order modulation 202 (e.g. 2FSK), a medium order modulation 204 (e.g. DQPSK), and a higher order modulation 206 (e.g. D8PSK).

If an example near-field receiver has a noise floor of about 18 dBµV, then a 11-15 dB E_{b}/N₀ is required (depending on a near-field signal modulation used) in absence of interferers present) to achieve a bit-error-rate (BER) of 1e-4 (1 bit error/10000 bits).

Thus in a presence of strong interferers, such as described in Figures 1A and 1B, with high noise threshold 104 for the keyboard 100 and kitchen mixer 102, near-field communication can be lost or severely degraded. While increasing the near-field device's transmit power might be an initial thought, such power increases could not only be costly to a wireless device's battery life, but also may not be permitted due to various regulatory and process technology constraints.

Now discussed are example embodiments of a wireless device with an adaptable modulation order and modulation scheme based on a variable noise environment. The wireless device includes a physical (PHY) layer which can be switched between a lower power/current consumption mode in an interferer-free or low interferer condition, or higher noise/interferer immunity mode in a high/strong interferer conditions. Note that while the discussion that follows discusses near-field signaling, this discussion also applies to far-field devices. Also, while specific interference sources (i.e. interferers) such as a keyboard and kitchen mixer are discussed, this discussion also applies to any form of noise/interferer that exhibits a variable behavior.

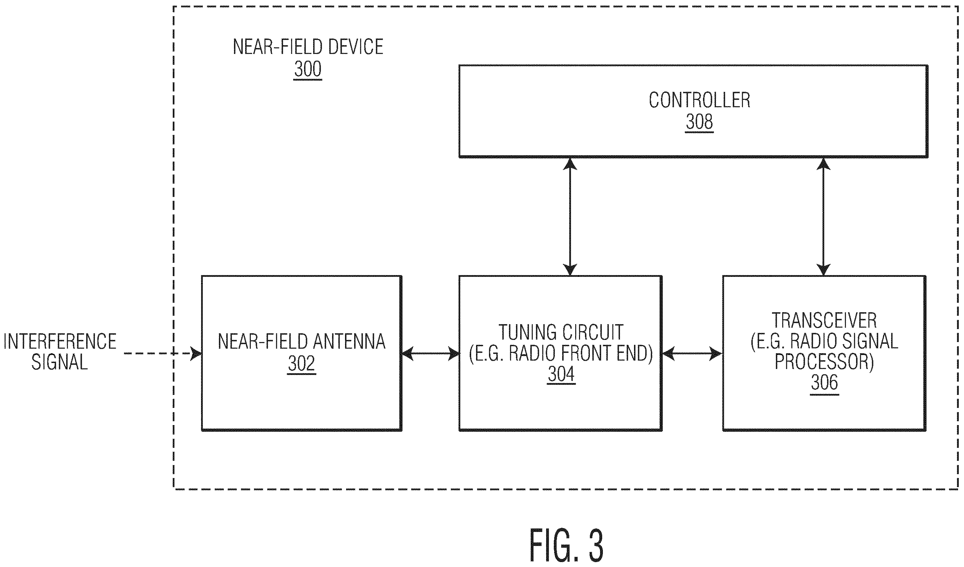

Figure 3 represents an example wireless device 300. The example near-field wireless device 300 includes a near-field antenna 302, a tuning circuit 304 (e.g. radio front end), a transceiver circuit 306 (e.g. radio signal processor), and a controller 308.

The tuning circuit 304 is configured to adjust the device's 300 resonance frequency using a capacitive bank (C-bank), and bandwidth using a resistive bank (R-bank) in response to signals from the transceiver circuit 306 and the controller 308 so that the wireless device 300 can communicate with other wireless devices (not shown).

The controller 308 is configured to monitor and maintain the device's 300 operational resonance frequency and operational bandwidth/quality factor of the near-field signals (e.g. NFEI or NFEMI) carried by the near-field antenna. The controller 308 is configured to adjust tuning parameters in the tuning circuit 304 if either the operational resonance frequency is different from a preselected resonance frequency and/or the operational bandwidth is different from a preselected bandwidth. The controller 308 is also configured to monitor one or more near-field communications link characteristics (e.g. RSSI (Received Signal Strength Indicator)).

The controller 308 is configured to select a set of physical (PHY) layer modulation orders (e.g. modulation mode, modulation scheme, etc.) for transmitting near-field signals. The modulation order can have two or more modulation-states. Modulation Order (MO) is herein defined as a number of different signal states (e.g. symbols) possible in each near-field signal transmission. For example, an MO=2 defines a two-state (e.g. (differential) binary shift keying ((D)BSK)) communication signal (e.g. 0, 1 or -1, 1 or etc.). An MO=4 is a (differential) quadrature phase shift keying ((D)QPSK) communications signal. An MO=m is an m-state communications signal, where m=any power of 2 (e.g. 2¹=2, 2²=4, 2³=8, 2⁴=16, etc.). Higher MOs can achieve a higher data-rate by encoding each signal state as a greater equivalent number of bits (e.g. (D)QPSK has 4 phase states with 2 bits/symbol, and (D)BPSK has 2 phase states with 1 bits/symbol). Higher modulation orders result in a higher maximum data rate.

(D)PSK symbol encodings have an E_{b}/N₀ and current consumption advantages over FSK (frequency shift keying) encodings. However, FSK has better interferer rejection, since all information is included in the FSK encoded signal's zero crossings and not the signal's amplitude, and has a lower crest factor than (D)PSK encodings Thus FSK encodings require a lower transmitter back-off, and allows a higher average (root mean square) transmit level within a same set of technological constraints.

The controller 308 is configured to choose the modulation order as well as the transmitter output power based on real-time obtained interference information, thereby optimizing functionality and performance between power consumption, data throughput and interference immunity. In various example embodiments, higher modulation orders (e.g. (D)xPSK) are selected for interferer-free or low interference conditions, and lower modulation order (e.g. 2FSK) are selected for medium or high interference conditions.

In various example embodiments, the controller 308 is configured to receive an interference signal and define an interference threshold. The controller 308 is then configured to command the transceiver 306 to modulate a transmit signal at a first data rate if the interference signal is below the interference threshold, and modulate the transmit signal at a second data rate if the interference signal is above the interference threshold. Due to the presence of the interference signal, the first data rate is greater than the second data rate.

In some example embodiments so as to better ensure low BER/PER (Packet Error Rate) transmissions, the controller 308 is configured to characterize the interference signal. For example, in clean electromagnetic environmental conditions (e.g. absence of any data exchange) an idle (e.g. background) RSSI signal level is established. Thus later should the RSSI increase above a predetermined high-threshold, the controller 308 will conclude that a strong interferer is present and thus change a modulation order of the transmit signal to compensate and ensure continued wireless transmissions.

Particularly in the near-field band (e.g. < 30 MHz), most interferers show a periodic character (e.g. periods of high noise power levels alternated with periods of lower noise power levels). Depending on the duty cycle of the high power level impulsive noise, and the duration of the low noise power level window, the controller 308 optimizes power consumption in some example embodiments according to following approach.

First, in absence of a strong interferer, the controller 308 configures the transceiver 306 to transmit with the highest possible modulation order in between the noise peaks so as to minimize energy/bit and reduce near-field communications power consumption.

Second, in the presence of an interferer which shows a periodic behavior, if the data rate can be sustained by transmission between the strong noise bursts, then the controller 308 configures the transceiver 306 to transmit with the highest possible PHY order in between the noise peaks for a greater power/bit efficiency, and schedule message data such that the longest possible packets which fit between the high noise power windows are transmitted to reduce a relative cost of overhead. However, if a required data rate cannot be sustained by packet transmission during the window between the high noise power timeslots, the controller 308 adds low PHY order transmission during the high noise power timeslots (e.g. alternating high PHY order (between noise peaks) and low PHY order (during the noise peaks)).

Third, in the presence of an interferer which does not show a stable periodic character, then the controller 308 configures the transceiver 306 to transmit with low PHY order, for highest resilience during the noise peaks.

In some example embodiments, the controller 308 is configured to reverify the presence or absence, and the periodicity of the interferer if one or more communications link performance indicators degrade (e.g. bit error rate (BER), packet error rate (PER), (D)EVM, CRC, etc.) or when a periodic timer expires.

In various example embodiments the wireless device 300 is synchronized with other wireless devices such that all wireless devices, based on the interferer and periodicity information, know approximately when one wireless device is transmitting and the other wireless device is receiving. During known empty timeslots in the wireless communication, when the transmitting device is silent, the receiving device can assess the level of background signals, i.e. a combination of noise, interferers and disturbers.

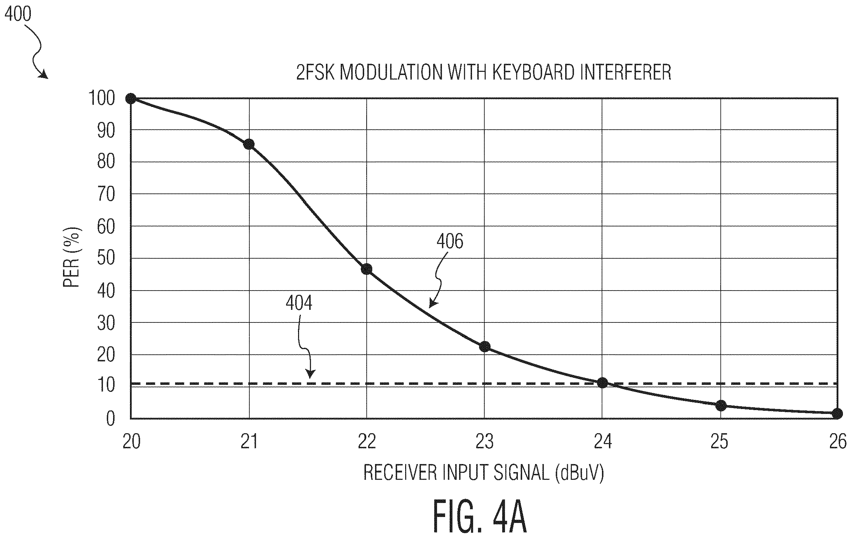

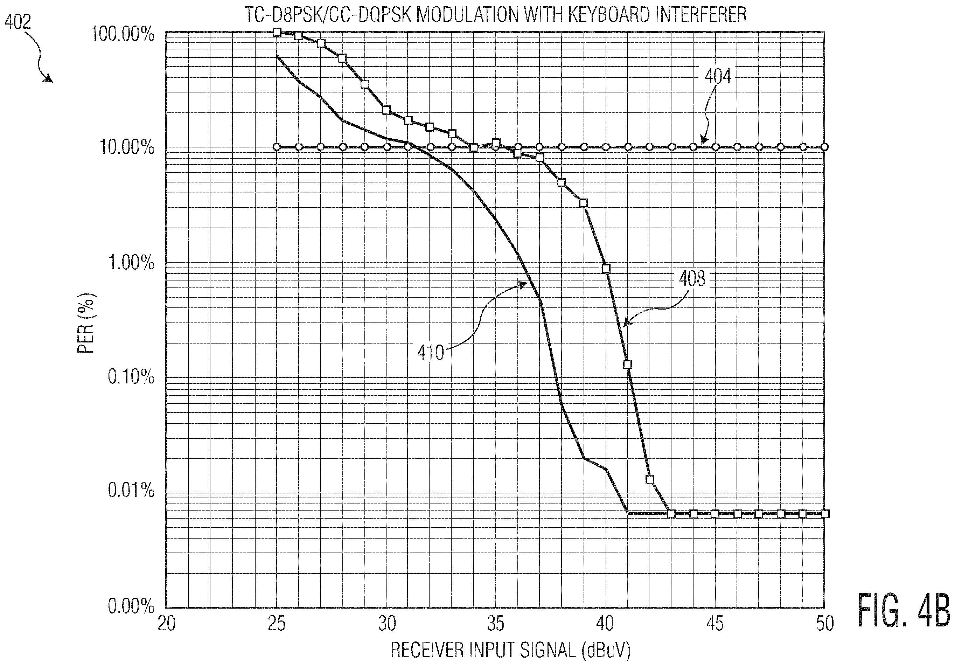

Figure 4A is an example 400 graph of a near-field receiver input signal (dBµV) vs. packet error rate (PER) for a Convolutionally Coded (CC)-2FSK 406 received near-field signal in -the presence of a keyboard interferer. Figure 4B is an example 402 graph of a near-field receiver input signal (dBµV) vs. packet error rate (PER) for a Trellis Coded (TC)-D8PSK 408 received near-field signal and a Convolutionally Coded (CC)-DQPSK 410 in the presence of a keyboard interferer. An example 10% PER (packet error rate) threshold 404 is also shown in both Figures 4A and 4B.

The D8PSK 408 is trellis coded at a 2/3 rate, the DQPSK 410 is convolutionally coded at a ½ rate, and the 2FSK 406 is also convolutionally coded at a ½ rate. All three modulations use error correction, and have a packet payload size of about 188 µs, hence their active air times are all the same.

When the keyboard interferer is present, using 2FSK 406, then at least a 24 dBµV receiver input signal is needed to maintain a PER of less than 10%. However, when using D8PSK 408, then at least a 35 dBµV receiver input signal is needed to maintain a PER of less than 10% and when using DQPSK 410, then at least a 31 dBµV receiver input signal is needed to maintain a PER of less than 10%.

Thus near-field receiver sensitivity is improved by switching to the lower modulation order 2FSK 406 from the higher modulation order D8PSK 408 or DQPSK 410 when the interferer is present. This near-field receiver sensitivity improvement is about 7 dB between CC-2FSK 406 and CC-DQPSK 410 and about 10dB between CC-2FSK 406 and TC-D8PSK 408.

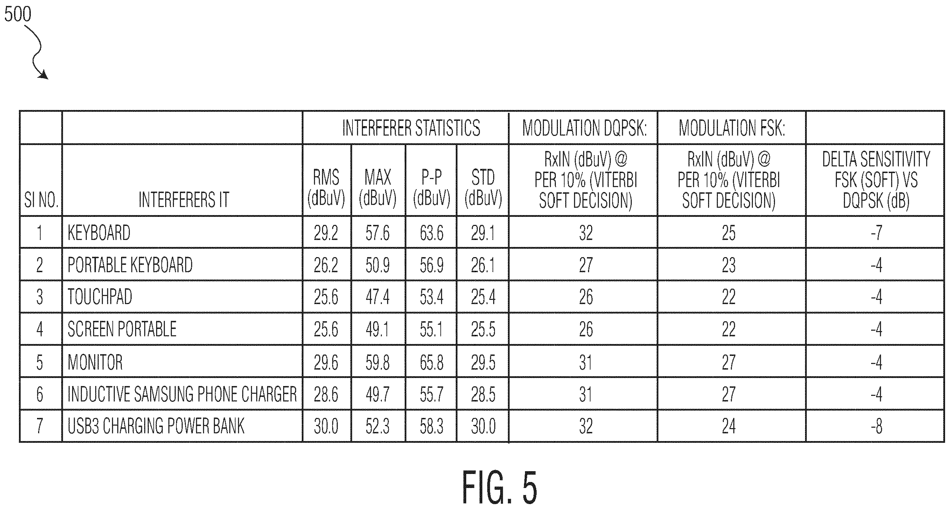

Figure 5 is an example 500 table of an improvement in the wireless device's 300 receiver sensitivity when switching modulation between CC-DQPSK and CC-2FSK in the presence of various interference signals. Note, RxIN is an RF Input level, the voltage seen at antenna pins of the receiver's IC. A gain in sensitivity when switching modulation from CC-DQPSK to CC-2FSK is between 4 to 8 dB. When the interfering signals have impulse noise behavior, then switching the modulation to FSK brings in significant improvement in receiver sensitivity

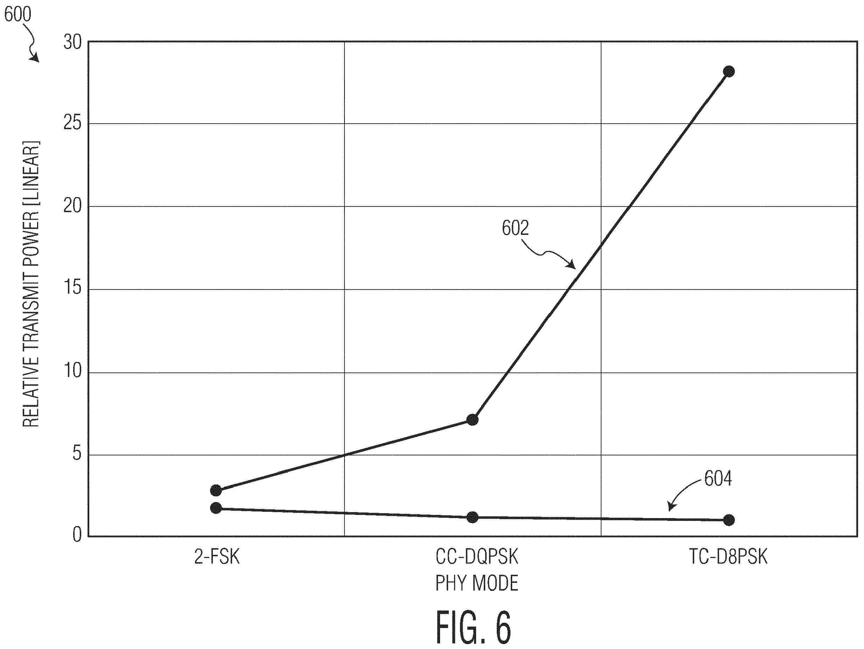

Figure 6 is an example 600 required transmit power for a 10% PER for various PHY modes in presence 602 and absence 604 of an interferer. The example 600 comparative transmit power consumption for PHY modes CC-2FSK, CC-DQPSK and TC-D8PSK assumes an identical net data throughput. This example's 600 data is normalized to the TC-D8PSK mode in an interferer-free AWGN conditions at 10% PER.

Without interference 604, modulation mode D8PSK requires a "least transmit power" for the 10% PER, thereby offering a longest battery operation time and autonomy. CC-DQPSK and CC-2FSK bring along a 17.8 % (1.42 dB) and 78.7% (5.04 dB) increase in transmit power consumption for the same net data throughput and PER.

However with strong interference 602 interference D8PSK becomes the worst. In the presence of the interferer, the trend is entirely different and 2-FSK requires, for a same net data throughput and 10 % PER, a lowest power consumption with a 183% (9.04 dB) increase in transmit power compared to the reference TC-D8PSK power consumption in AWGN conditions, while up to a 6 times higher power consumption for CC-DQPSK and a 28 times higher power consumption for TC-D8PSK is required to reach the 10 % PER.

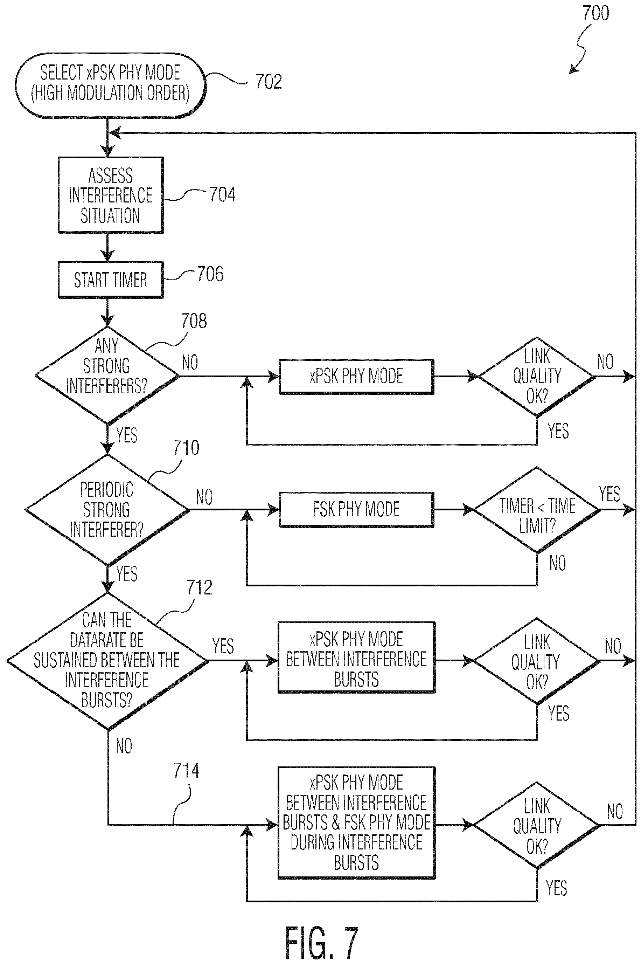

Figure 7 is an example set of instructions 700 for enabling the wireless device 300 to select a modulation order. Note, the order in which the instructions are discussed does not limit the order in which other example embodiments implement the instructions unless otherwise specifically stated. Additionally, in some embodiments the instructions are implemented concurrently.

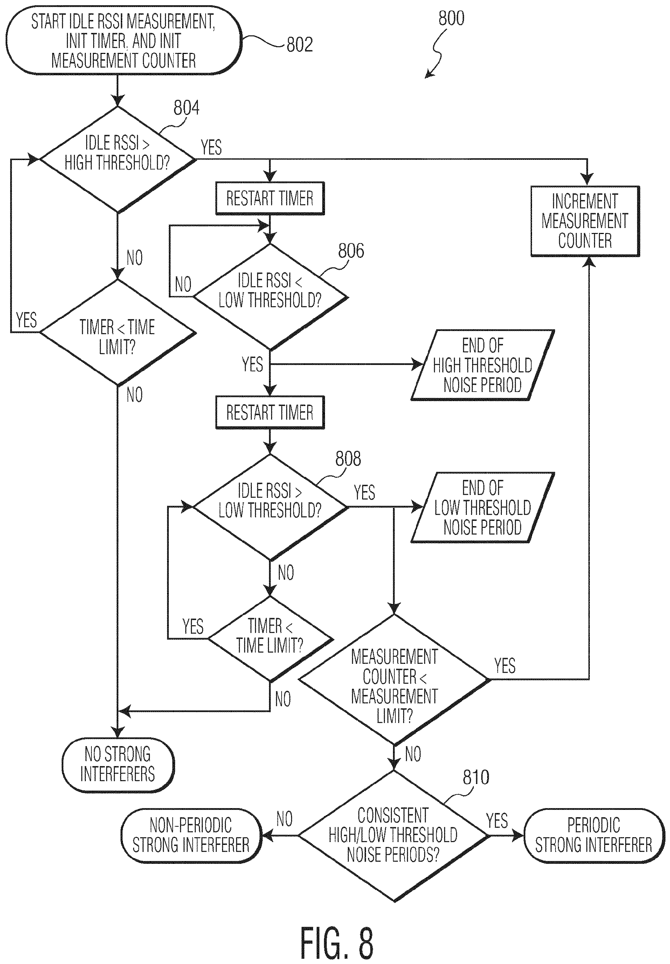

Step 702, initially the system starts up in a higher modulation order and lowest power/bit mode (DxPSK). The specific higher modulation order "x" (e.g. 8, Q, B as in D8PSK, DQPSK, DBPSK) is determined based on a SNR (signal-to-noise ratio) in absence of any interference. Step 704, a presence of any interferers is assessed (see Figure 8). A periodic re-assessment is made to check if the interference context has changed (i.e. either improved after a specific time limit, or deteriorated as indicated by a link quality indicator (LQI); this can be a degradation in receiver (D)EVM, bit error rate, packet error rate, CRC error rate etc. Step 706, a timer is used, to re-assess at regular times the interference context.

Step 708, if no strong interferers are detected a highest modulation order that also maintains a predetermined BER is used for a greater data rate and lower energy/bit power consumption considerations. Step 710, if a strong non-periodic interferer is observed a lower modulation order that is also more interference resilient is used for robustness reasons (i.e. to maintain the predetermined PER/BER).

Step 712, if a strong and periodic interferer is observed the highest modulation order is used, but transmission is only permitted between the strong interference bursts. In some example embodiments, timing alignment between the receiver and transmitter can be effected using timing beacons, having a same periodicity as the interference bursts. Alternatively, either the transmitter or receiver can send short polling packets, marking a beginning of a transmission timeslot, perhaps also including information about the low noise time window.

Step 714, if the data rate which can be sustained in process 712 is insufficient, additional data throughput can be created by switching to the lower modulation order for needed transmissions during the high interference bursts.

The above steps can be performed in any wireless device, but have particular applicability to near-field wireless communication devices. Also either or both of the devices in communication can perform the above steps. In some example embodiments, the above steps are performed right before one of the wireless devices is to transmit a signal to the receiving device.

Figure 8 is an example set of instructions 800 for enabling the wireless device 300 to detect a presence of any interferers. In step 802, start an Idle (i.e. no communications) RSSI (received signal strength indicator) measurement, initialize a timer, and initialize a measurement counter.

In step 804, check if Idle RSSI exceeds a High Noise Threshold, which indicates a presence of strong interferers of any type.

In step 806, if strong interferers of any type are present, then check if Idle RSSI has now gone below a Low Noise Threshold. This indicates that the strong interferer has stopped interfering at the moment.

In step 808, if Idle RSSI has now gone back above the Low Noise Threshold. This indicates that the strong interferer has begun interfering again.

In step 810, depending upon whether the measurement counter has reached a measurement counter limit within a predetermined time period, the interferer is categorized as either a periodic strong interferer or a non-periodic strong interferer.

Applications for the wireless device 300 include wearables for wireless on-body networks, such as for personal use business or recreational use, as well as in medical and resource management settings. At least one medical application includes a near-field on-body glucose sensor and an near-field insulin pump also worn on-body or located close to the body for diabetes care. Another example application of a wireless on-body network is access control by way of touch using near-field communication technology.

One example discloses a wireless device, comprising: an input configured to receive an interference signal; a transmitter configured to generate a transmit signal having either a first data rate or a second data rate; and a controller coupled to the input and the transmitter, and configured to define an interference threshold; wherein the controller is configured to command the transmitter to modulate the transmit signal at the first data rate if the interference signal is below the interference threshold, and modulate the transmit signal at the second data rate if the interference signal is above the interference threshold.

In some example embodiments the set of instructions described above are implemented as functional and software instructions. In other embodiments, the instructions can be implemented either using logic gates, application specific chips, firmware, as well as other hardware forms.

When the instructions are embodied as a set of executable instructions in a non-transitory computer-readable or computer-usable media which are effected on a computer or machine programmed with and controlled by said executable instructions. Said instructions are loaded for execution on a processor (such as one or more CPUs). Said processor includes microprocessors, microcontrollers, processor modules or subsystems (including one or more microprocessors or microcontrollers), or other control or computing devices. A processor can refer to a single component or to plural components. Said computer-readable or computer-usable storage medium or media is (are) considered to be part of an article (or article of manufacture). An article or article of manufacture can refer to any manufactured single component or multiple components. The non-transitory machine or computer-usable media or mediums as defined herein excludes signals, but such media or mediums may be capable of receiving and processing information from signals and/or other transitory mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A wireless device, comprising:
an input configured to receive an interference signal;
a transmitter configured to generate a transmit signal having either a first data rate or a second data rate; and
a controller coupled to the input and the transmitter, and configured to define an interference threshold;
wherein the controller is configured to command the transmitter to modulate the transmit signal at the first data rate if the interference signal is below the interference threshold, and modulate the transmit signal at the second data rate if the interference signal is above the interference threshold.

2. The device of claim 1:
wherein the first data rate is greater than the second data rate.

3. The device of any preceding claim :
wherein the first data rate has a higher physical layer modulation order than the second data rate.

4. The device of any preceding claim:
wherein the first data rate has a lower energy/bit ratio than the second data rate.

5. The device of any preceding claim:
wherein the transmit signal is a near-field communications signal.

6. The device of any preceding claim:
wherein the controller is configured define a first period when the interference signal is below the interference threshold, and a second period when the interference signal is above the interference threshold.

7. The device of claim 6:
wherein the first data rate is greater than the second data rate; and
wherein the controller is configured to command the transmitter to generate the transmit signal only using the first data rate in the first period.

8. The device of claim 6 or 7:
wherein the first data rate is greater than the second data rate; and
wherein the controller is configured to command the transmitter to generate the transmit signal only using the second data rate in the second period.

9. The device of any of claims 6 to 8:
wherein the controller is configured to command the transmitter to generate the transmit signal only in the first period.

10. The device of any preceding claim :
wherein the first data rate is encoded using PSK (phase shift keying) and the second data rate is encoded using FSK (frequency shift keying).

11. The device of any preceding claim :
wherein the interference signal affects either a packet-error-rate (PER) or bit-error-rate (BER) of the transmit signal when received.

12. The device of any preceding claim :
wherein the wireless device is powered by a battery and/or an energy harvesting device.

13. The device of any preceding claim :
wherein the controller is configured to recharacterize the interference signal each time a message is to be sent within the transmit signal.

14. The device of any preceding claim :
wherein the controller is configured to characterize the interference signal as either periodic or non-periodic over a predetermined time window.

15. The device of claim 14:
wherein the first data rate is greater than the second data rate;
wherein if the interference signal is periodic, then the controller is configured to command the transmitter to modulate the transmit signal at the first data rate during an absence of the interference signal; and
wherein if the interference signal is non-periodic, then the controller is configured to command the transmitter to only modulate the transmit signal at the second data rate.
